# EUROPÄISCHE PATENTSCHRIFT

(11) **EP 2 130 638 B1**
(45) Veröffentlichungstag und Bekanntmachung des Hinweises auf die Patenterteilung: **10.07.2013**
(21) Anmeldenummer: 09160219.3
(22) Anmeldetag: 14.05.2009
(51) Int. Cl.: B23K 26/14, B23K 26/38, B23K 37/08, B23K 26/08, B23K 26/00, C21D 1/09

(54) **Verfahren zur Kantenbehandlung metallischer Werkstücke unter Verwendung eines Laserstrahles**
Method for handling the edges of metallic workpieces using a laser beam
Procédé de traitement des bords de pièces métalliques utilisant un faisceau laser

(30) Priorität: 05.06.2008 DE 102008026913
(43) Veröffentlichungstag der Anmeldung: 09.12.2009
(73) Patentinhaber: MKN Maschinenfabrik Kurt Neubauer GmbH & Co. KG, 38300 Wolfenbüttel (DE)
(72) Erfinder: Helm, Peter, 38304 Wolfenbüttel (DE)
(74) Vertreter: Strobel, Wolfgang

(56) Entgegenhaltungen:
- WO-A-2008/103239
- DE-A1- 4 020 700
- JP-A- 11 138 283
- JP-A- 2002 210 577
- US-A1- 2008 041 833

## Beschreibung

Die vorliegende Erfindung betrifft ein Verfahren zur Bearbeitung von Bauelementen mit einer Kantenbehandlung flächiger metallischer Werkstücke, die Teile des Bauelementes darstellen, gemäß dem Oberbegriff des Anspruch 1 (siehe, z.B., JP 11/138 283). Häufig ist es erforderlich, die Kanten insbesondere flächiger Werkstücke besonders zu behandeln. Dies betrifft beispielsweise flächige Werkstücke, die Teile von Haushalts- und Küchengeräten werden sollen, beispielsweise von Gargeräten, etwa als Verkleidungen von Türen und Klappen.

In der Regel werden zur Herstellung derartiger flächiger metallischer Werkstücke Bleche dünnerer Wandstärke zunächst mittels Stanzwerkzeugen, aber auch mit Schneidgeräten wie Laserstrahlen oder Wasserstrahlschneiden passend geschnitten und ihnen auf diese Weise die angestrebte Form gegeben. Durch diese Bearbeitung entsteht allerdings ein mehr oder weniger scharfer Grat an den neu geschaffenen Stirnflächen des Bleches.

Zu beachten ist, dass derartige Stirnflächen nicht nur Linien, sondern tatsächlich Flächen sind, auch wenn die Abmessungen dieser Flächen sehr unterschiedlich sind. De Länge entspricht der Länge der geschnittenen Kante, die Breite der Stirnfläche ist weit geringer und entspricht der Blechstärke des geschnittenen Bleches. Es bilden sich also auf dieser Stirnfläche wiederum vier Seitenränder. Meist befindet sich ein solcher Grat nur auf einem der beiden langen Seitenränder der Stirnfläche, also senkrecht zur Blechstärke des zugeschnittenen Bleches, dies muss aber nicht immer der Fall sein. Die Stirnfläche bildet insgesamt eine Art Landschaft mit scharfen Spitzen und Vertiefungen aus.

Insbesondere der meist deutlich über die Stirnfläche vorspringende Grat an dem einen Längsrand der entstandenen Stirnfläche ist unerwünscht, da er sehr scharf ist und dies zu Verletzungen an den Händen und anderen Hautoberflächen des oder der Benutzer oder zu Beschädigungen und zumindest zu Kratzern an anderen Bauteilen führen kann.

Deshalb werden in dieser Form geschnittene Bleche in der Regel mittels geeigneter Schleiftechnik entgratet, also die deutlich vorspringenden Spitzen beziehungsweise Grate entfernt oder zumindest eingeebnet. Dieser Schleifvorgang ist gerade bei einer industriellen Serienfertigung immer ein zusätzlicher Arbeitsgang, so dass dadurch erhebliche Kosten erzeugt werden. Wirtschaftlich praktikabel lässt sich erfahrungsgemäß so auch nur ein Seitenrand der Stirnfläche des Bleches entgraten. Eine Entgratung von zwei parallelen Seitenrändern erfordert also zwei nacheinander durchzuführende Schleifvorgänge mit dementsprechend noch höheren Kosten.

Um diese kostspieligen Verfahrensschritte zu vermeiden, wird in der Praxis häufig das flächige Werkstück parallel zu der Schnittkante mit ihrer den Grat aufweisenden Stirnfläche um 180° umgebogen, also gefalzt, und dann auf sich selbst zurückgelegt und dort die Stirnfläche gegebenenfalls verschweißt oder sonst befestigt. Dadurch wird das danach immer noch weitgehend flächige Werkstück nach diesem Bearbeitungsschritt nicht mehr durch eine Stirnfläche mit rauher zerklüfteter Oberfläche und einem Grat abgeschlossen, sondern durch die glatte Außenseite der entstandenen Schlaufe des um 180° umgebogenen Werkstückabschnitts. Die kritische Stirnfläche liegt dann im Bereich einer der großen Seitenflächen des Werkstückes gewissermaßen als Stufe auf.

Diese Vorgehensweise ist zumindest dann möglich, wenn diese Seite des flächigen Werkstückes eine Rück- oder Innenseite eines fertigen Bauteiles wird und somit selbst weder einem Kontakt mit der Hand oder Haut des Benutzers ausgesetzt ist noch optischen Ansprüchen genügen muss. Gleichwohl hat diese Vorgehensweise erhebliche Nachteile: Sie erhöht den Materialverbrauch unter Umständen beträchtlich und sie führt zu einem höheren Gewicht des entstehenden Bauteils. Auch die doppelte Werkstückdicke des Werkstücks in der Nähe dieser Kante ist in vielen Anwendungsfällen ungünstig, auch wenn es sich um eine "nach innen" gerichtete Verdickung handelt.

Manche derartige metallische flächige Werkstücke, auch Platinen genannt, welche solch einen Grat aufweisen, werden in weiteren Bearbeitungsschritten durch Pressen oder Abkantpressen so umgeformt, dass sie einen dreidimensionalen Körper bilden. Dadurch ergeben sich aus den ursprünglich flächigen Werkstücken oft kastenartige Gebilde, bei denen entstehende Stoßkanten verbunden werden müssen. Dies Stoßkanten werden dabei häufig verschweißt.

Ein sehr modernes Verfahren, um solche Stoßkanten zu verbinden, ist das so genannte Laserschweißverfahren, das beispielsweise für Längsnahtschweißungen rohrartiger Bauteile in der DE 34 46 280 A1 vorgeschlagen wird. Mit Hilfe eines Laserstrahles werden zwei aneinander angrenzende Stoßkanten ohne einen zusätzlich zuzusetzenden Zusatzwerkstoff (also ohne Fluss- oder Lötmittel oder dergleichen) miteinander verschweißt. Das Besondere an diesem Schweißverfahren ist, dass für normale Ansprüche keine Nachbearbeitung der Schweißnaht erforderlich ist.

In der DE 197 37 160 C2 wird daher beispielsweise unter anderem vorgeschlagen, einen Laserschweißschritt beim Verbinden der flächig aneinander liegenden Außen- und Innenhaut einer Kraftfahrzeugtür oder -klappe einzusetzen. Als besonderer Vorteil dieser Vorgehensweise wird erörtert, dass durch die entstehende Schweißnaht nicht nur eine gewünschte feste Vebindung zweier Bauteile entsteht, sondern auch gleich der zwischen den beiden flächig nebeneinander liegenden Stirnkanten der beiden Bauteile entstehende unebene Zwischenraum mit aufgefüllt und abgerundet wird und auf diese Weise bei der Verbindung der beiden Bauteile auch schon ein Verrunden der Blechschnittkanten erfolgt und auf zusätzliche Falz- und Bördelvorgänge verzichtet werden kann.

In ganz anderem Zusammenhang ist bei der Kantenbehandlung von Glasscheiben in der US 2008/041833 A1 und der nachveröffentlichten WO 2008/103239 A1 vorgeschlagen worden, eine Schnittkante der Glasscheibe zunächst vorzuheizen und dann mit einem Laserstrahl entzubehandeln, wobei in Hinblick auf den Werkstoff "Glas" besondere Augenmerk auf das Reduzieren örtlicher Spannungen gerichtet wird.

Ebenfalls nicht für ein Verbinden flächiger metallischer Bauteile, dafür aber für Federn wird in der DE 40 20 700 A1 vorgeschlagen, mit Laserstrahlen etwas ganz anderes durchzuführen, nämlich durch eine andere Einstellung der Intensität und Dauer der Laserbestrahlung die Federn an ihrer Oberfläche zumindest teilweise zu härten oder auch die Federn mit dem Laserstrahl zu erwärmen und so ein Erweichen oder Aufschmelzen der Oberfläche bis zu einem bestimmten Punkt herbeizuführen und die Kanten zu verrunden. Der Vorgang wird so lange vorgenommen, bis dieser Effekt erzielt wird, dann kann der Erwärmungsvorgang abgebrochen werden. Jede einzelne Feder wird so verarbeitet und taktweise ein solcher Vorgang durchgeführt, so das Polierpaste gespart und Schleifspuren an den Federn vermieden werden.

In der JP 11 138 283 wird eine Verrundung von Kanten von Bauelementen vorgeschlagen, bei dem die Kante mit einem Laserstrahl von der Seite bearbeitet wird. Der Fokus des Laserstrahls wird auf einen Punkt oberhalb beziehungsweise seitlich der Kante gesetzt und eine Bearbeitung erfolgt für einige wenige Millimeter. Die Bestrahlungsposition des Laserstrahls wird in Richtung zur Innenseite der Kante des zu bearbeitenden Werkstückes versetzt und der Laserstrahl längs der Kante bewegt.

Aus der JP 2002 210 577 A ist ein Vorschlag bekannt, eine Verrundung von Kanten mit einem Laserstrahl unter Schutzgas durchzuführen und so die Ecken von größeren Bauelementen abzurunden.

Aus der DE 199 26 118 A1 ist ein Verfahren zur Herstellung von Hitzeschildern bekannt, bei dem zwei metallische Materiallagen randseitig miteinander verbunden werden sollen. Dabei wird zunächst mit dem Laserstrahl ein Zuschnitt der Materiallagen hergestellt. Danach wird mit dem Laserstrahl bei einer anderen Intensität der Verschweißungsvorgang vorgenommen. Während des Ausschneidevorganges entstehen scharfe Kanten am Umfangsrand der Materiallagen. Diese scharfen Kanten können durch eine mechanische Glättung entschärft oder entgratet werden oder aber der Laserstrahl kann auch in nicht näher ausgeführter Form zum Abstumpfen dieser Kanten eingesetzt werden.

In der erst nach dem Prioritätstag der vorliegenden Patentanmeldung veröffentlichten EP 1 939 488 A1 wird ein Verfahren zum Verarbeiten kontinuierlicher Metallbänder beschrieben. Dabei werden seitliche Kantenabschnitte des Metallbandes aufgeschmolzen und wieder verfestigt. Dadurch sollen endlose Metallbänder für Schubtreibriemen einfacher als bisher und insbesondere ohne aufwändige Walk- oder Taumelverfahren zur Verfügung gestellt werden; Schweißvorgänge sind für die Metallbänder nicht vorgesehen.

Beim Verbinden mehrerer Werkstücke zum Schaffen größerer Bauelemente wird daher Laserschweißen auch in der Praxis vielfach eingesetzt. Ein Beispiel wird etwa in der DE 10 2004 038 310 A1 beschrieben. Derartige Laserschweißgeräte besitzen Laserwerkzeuge mit einer Laseroptik, die Werkstücke mit Laserstrahlen bearbeitet. Dies sind in erster Linie Schweiß- oder Lötprozesse. Ein Bearbeitungskopf wird dabei an einem mehrachsigen Roboterarm geführt.

Derartige Laserschweißgeräte sind hochkomplex und kostspielig. Mit den Laserbearbeitungsköpfen lassen sich neben den Schweißprozessen auch grundsätzlich Schneidvorgänge oder Kantenverrundungsvorgänge und ähnliches durchführen.

Laserschweißgeräte sind zwar vergleichsweise kostspielige Anlagen, stehen dafür jedoch in vielen Fabrikationsbereichen zur Verfügung. Problematisch bei ihnen ist, dass auf Grund des hohen Kostenfaktors die Einsatzzeit der Laserschweißgeräte bei der Bearbeitung bestimmter Bauelemente kritisch ist und möglichst gering gehalten werden sollte, um die Taktzeit niedrig zu halten.

In der Praxis kommt es durchaus vor, dass die eingangs erwähnten flächigen metallischen Werkstücke aus Blechen dünnerer Wandstärke zunächst mit einem der erwähnten Verfahren aus der Schleiftechnik entgratet oder durch Falzen oder Bördeln die Grate aus dem gefährlichen Bereich herausgenommen werden, um dann die flächigen Werkstücke mit den Laserschweißgeräten mit anderen Werkstücken zu verbinden und zu verschweißen, um komplizierter aufgebaute Bauelemente zu schaffen.

Nachwievor stellt also die Entgratung einer einzelnen Stirnfläche eines zugeschnittenen flächigen metallischen Werkstückes ein erhebliches Problem dar.

Aufgabe der Erfindung ist es daher, ein Verfahren vorzuschlagen, mit dem auf eine effektivere Art und Weise eine Kantenbehandlung metallischer Werkstücke erfolgen kann.

Diese Aufgabe wird bei einem gattungsgemäßen Verfahren mit der Erfindung dadurch gelöst, dass das Bauelement mit seinem oder seinen Werkstücken in einer Aufspannung festgelegt wird und dann ein Schweißlaserkopf mittels eines Mehrachsen - Roboterarms über die zu verbindenden und über die zu entgratenden Kanten des Bauelementes geführt wird, dass der Laserstrahl in senkrechter Richtung auf die Stirnfläche gerichtet wird, dass der Durchmesser des Laserstrahls so gewählt wird, dass er gleich oder größer ist als die Stärke des flächigen Werkstücks, dass die Intensität des Laserstrahls so gewählt wird, dass das metallische Material des Werkstückes im Bereich der Stirnfläche aufgeschmolzen wird, dass nach dem Wegfahren des Schweißlaserkopfes mit dem Laserstrahl von dem jeweils bestrahlten Bereich der Stirnfläche das aufgeschmolzene metallische Material unter Beibehaltung einer verrundeten durch Oberflächenspannung entstandenen Oberfläche zum Erkalten und Erhärten gebracht wird, und dass vor und/oder nach dem Bestrahlen der gesamten Stirnfläche des Werkstückes mit dem gleichen Schweißlaserkopf und seinem Laserstrahl unmittelbar anschließend Verbindungsvorgänge von mehreren Werkstücken oder Abschnitten des gleichen Werkstückes und/oder weitere Kantenbehandlungsvorgänge an anderen Stirnflächen vorgenommen werden.

Die Erfindung ermöglicht einen sehr effektiven und zugleich funktionellen Einsatz der teuren Laserschweißgeräte. Ohne einen zusätzlichen Einschweiß- oder Umspannvorgang wird ein und dasselbe Werkstück von dem gleichen Laserschweißgerät mit dem gleichen Kopf und nahezu den gleichen programmierten Bewegungen hintereinander mehrfach an seinen Kanten bearbeitet.

Dieses Vorgehen ist extrem kostengünstig, da anstelle von mehreren Bearbeitungsvorgängen mit Zwischenschritten und manuellem Entnehmen, Transportieren und neu Einspannen in anderen Geräten jetzt ein einziger Arbeitsvorgang vorgenommen werden muss, bei dem lediglich mit unterschiedlichen, genau definierten, aber programmierbaren Intensitäts- und Richtungseinstellungen des Laserschweißkopfes in sehr kurzer Bearbeitungszeit und damit zu geringen Kosten der Maschine mehrere gewünschte Vorgänge unmittelbar hintereinander weg vorgenommen werden können. Diese reduzierte Zeit für die Benutzung der kostspieligen Laserschweißgeräte kann durch eine deutlich vergrößerte Zahl der beispielsweise während einer Stunde oder eines Tages so behandelten Platinen genutzt werden.

Es werden also mit Hilfe eines speziellen Einsatzes eines Schweißlaserschrittes Blechkanten durch deren Aufschmelzen entgratet. Der eingesetzte Schweißlaserstrahl muss senkrecht auf die Stirnfläche eines geschnittenen Bleches auftreffen. Das metallische Material verflüssigt sich. Es bildet sich durch die Oberflächenspannung aus dem verflüssigten Metall ein Meniskus, wie man ihn auch von Wasseroberflächen kennt. Dieser Meniskus hat hier den mehrfachen Vorteil, dass er sich auf Grund des gewählten Durchmessers des Laserschweißstrahles gerade über die gesamte Stirnfläche erstreckt und dafür sorgt, dass die Oberfläche des in diesem Moment noch flüssigen Metalles eine konvexe Erhebung über der Blechkante bildet, die genau von einer Seite bis zur Anderen des flächigen metallischen Werkstückes reicht.

Dabei werden sämtliche Erhebungen und Grate auf der Stirnfläche mit aufgeschmolzen. Es ist also möglich, auch Grate auf diese Weise zu beseitigen, die auf beiden Seitenrändern einer Stirnfläche stehen, oder auch sonstige, möglicherweise gefährliche oder unerwünschte Unebenheiten.

Dadurch kann überraschend ein separater Entgratvorgang der Platinen bei solchen Bauteilen vermieden werden.

Der Schweißlaserstrahl wird dabei unter Aufrechterhaltung des Strahles längs der Kante des metallischen flächigen Werkstückes verfahren. Das bedeutet, dass der Schweißlaserstrahl die ganze Zeit senkrecht auf der Stirnfläche verbleibt und diese auf Grund seines erfindungsgemäßen Querschnittes auch übe die gesamte Blechstärke überstreicht und nunmehr durch das Verfahren längs der Kante auch die wesentlich längere Längserstreckung der Stirnfläche nacheinander erfasst.

Während also der aufgeschmolzene Bereich der Stirnfläche zu Beginn eines Verfahrvorganges bereits wieder aus dem Strahlungskegel des Schweißlaserstrahles herausgelangt und die aufgeschmolzene Menge an Material erkaltet, wobei die runde Oberflächenform bestehen bleibt, werden nacheinander weitere Partien der metallischen Materialien auf der Stirnfläche aufgeschmolzen.

Dabei wird der Fokus des Laserstrahles so eingestellt, dass dieser geringförmig größer im Durchmesser ist als die Blechstärke des Bauteils. Dadurch bedingt, eignet sich das Verfahren insbesondere für Bleche mit einer Blechstärke von weniger als 5 mm. Somit können beide Blechkanten in einem Schritt gleichzeitig bearbeitet werden. Der Laser trifft senkrecht auf die Blechstärke auf. Dadurch, dass die gesamte Blechstärke mit Laserlicht beaufschlagt wird, entsteht über der gesamten Blechstärke ein Schmelzbad. Aufgrund des kreisrunden Laserstrahles entspricht die Länge des Schmelzbades ungefähr der Blechstärke. Aufgrund der Oberflächenspannung des flüssigen Schmelzbades ergibt sich ein abgerundetes Schmelzbad. Diese Form bleibt bis zum Erhärten des Bades erhalten. Durch eine stetige Bewegung des Lasers entlang der zu bearbeitenden Blechkante ergibt sich ein gleichmäßiges, näherungsweise halbrundes Querschnittsprofil.

Die Umschmelzung der Kante ist dann ideal, wenn eine Verrundung mit dem Radius der halben Blechstärke erfolgt ist.

Aufgrund der sehr genau einstellbaren Laserleistung und Verfahrgeschwindigkeit des Roboterarmes ist eine genaue Dosierung der Leistung möglich, dadurch wird in sehr vorteilhafter Weise ein Verzug der Blechkante vermieden.

Die Erfindung zeichnet sich außerdem dadurch aus, dass vor und/oder nach dem Bestrahlen der gesamten Stirnfläche des Werkstückes mit dem gleichen Schweißlaserkopf und seinem Laserstrahl unmittelbar anschließend Verbindungsvorgänge von mehreren Werkstücken oder Abschnitten des gleichen Werkstückes und/oder weitere der oben erörterten Kantenbehandlungsvorgänge an anderen Stirnflächen vorgenommen werden.

Durch diese Vorgehensweise wird besonders effizient ausgenutzt, dass ein Schweißlaserstrahl gegebenenfalls bei anders eingestellter Intensität natürlich nicht nur zu dem erfindungsgemäß durchgeführten Verrunden einer Kante in der Lage ist, sondern auch zu herkömmlich bereits üblichen Verbindungsschritten von zwei Werkstücken miteinander oder von zwei Bereichen eines mehrfach gebogenen Werkstückes miteinander.

Es kann dann mit besonderem Vorteil ein beispielsweise flächiges metallisches Werkstück zunächst längs einer Kante mit einem anderen Werkstück verschweißt werden, mit dem es verbunden werden soll, worauf hin dann eine daran anschließende Kante mit einer zu entgratenden Stirnfläche entsprechend wir oben erörtert behandelt wird, so dass der Entgratungsvorgang der einen Kante gleich nach dem Verschweißungsvorgang der anderen Kante vorgenommen werden kann.

Es kann sich dann wiederum ein Verschweißungs- bzw. Verbindungsvorgang von weiteren Kanten anschließen.

Die Bearbeitungszeit eines Bauelementes kann dadurch deutlich reduziert werden, da die kompletten Schleif- oder Falzvorgänge entfallen und die stattdessen durchgeführten Entgratungsvorgänge sehr effizient zu Zeitmomenten durchgeführt werden, bei denen sonst zwischen zwei Schweißvorgängen ein Leerlauf des Laserschweißkopfes von einem geometrischen Ort zu einem anderen geometrischen Ort durchgeführt werden müsste.

Das Verfahren ist gemäß der Erfindung von Vorteil, wenn das Blechbauteil in einer Aufspannung mit einem Schweißlaser geschweißt wird. Nun können je nach Objektgeometrie die Stoßkanten oder andere Schweißnähte des Objektes geschweißt werden und in dem gleichen Bewegungsablauf eines Laserschweißkopfes die offenen Blechkanten, welche nicht mit einer anderen Kante verschweißt werden, aufgeschmolzen und so entgratet werden.

Dies Verfahren ist besonders effizient, wenn an unterschiedlichen Stellen auf dem Bauelement geschweißt werden muss und die zu entgratenden Kanten zwischen den zum Schweißen vorgesehenen Bereichen liegen. Dann kann auf dem Verfahrweg eines Roboterarmes mit dem Laserschweißkopf von einer Schweißposition zur nächsten eine dazwischenliegende Kante entgratet werden.

Gemäß der Erfindung ist ein Laserschweißkopf an einem Mehrachsen-Roboterarm befestigt. So kann man alle Stellen des Bauelements, die zu schweißen sind, erreichen. Darüber hinaus kann der Laserkopf, wenn der Roboterarm genügend Freiheitsgrade besitzt, in jede beliebige Lage gegenüber der Bauelementoberfläche gebracht werden.

Eine bevorzugte Ausführungsform des erfindungsgemäßen Verfahrens zeichnet sich dadurch aus, dass zumindest während des Aufschmelzens des metallischen Materials der Stirnfläche des Werkstückes ein Formiergas eine Atmosphäre um das entstehende Schmelzbad bildet, um einen Schutz gegenüber Oxidation zu erzielen.

Durch Formieren können Anlauffarben auf den umgeschmolzenen Kanten vermieden werden.

Mittels so genannter Formiergasdüsen können Anlauffarben im Bereich der Schweißnaht vermieden werden.

Es hat sich als besonders vorteilhaft herausgestellt, bei einer Stärke des flächigen Werkstücks, üblicherweise also bei einer Blechdicke zwischen 0,8 mm und 1,5 mm einen Durchmesser des Laserstrahls zwischen 1,5 mm und 2,0 mm einzusetzen. Der Durchmesser des Laserstrahls wird üblicherweise als Strahlbreite am Werkstück genommen. Diese ist dann etwas größer als die Blechdicke. Es hat sich herausgestellt, dass dieser Strahldurchmesser sogar weitgehend konstant bei verschiedenen Blechdicken eingesetzt werden kann und trotzdem jeweils ein sehr zufriedenstellendes Ergebnis liefert.

Die eingesetzte Leistung des Laserstrahls sollte bevorzugt zwischen 400 Watt und 1.000 Watt liegen. Dabei haben sich Leistungsgrößen von etwa 500 Watt bei einer Blechdicke von 0,80 mm oder von 875 Watt bei einer Blechdicke von 1,50 mm bereits bewährt.

Die Vorschubgeschwindigkeit des Laserstrahls längs der zu behandelnden Stirnfläche des Werkstücks sollte zwischen 0,01 m/s und 0,03 m/s liegen. Dies führt zu einer optimalen Verrundung der Blechkanten. Besonders bevorzugt ist eine Vorschubgeschwindigkeit von 0,02 m/s.

Im Folgenden wird anhand der Zeichnung ein Ausführungsbeispiel der Erfindung näher beschrieben. Es zeigen:
- **Figur 1**: einen Schnitt durch einen Abschnitt eines Werkstück in der aufeinander folgenden zeitlchen Phasen eines erfindungsgemäßen Verfahrens; und
- **Figur 2**: eine perspektivische Ansicht eines dreidimensionalen kastenartigen Aufbaus aus einem flächigen Werkstück.

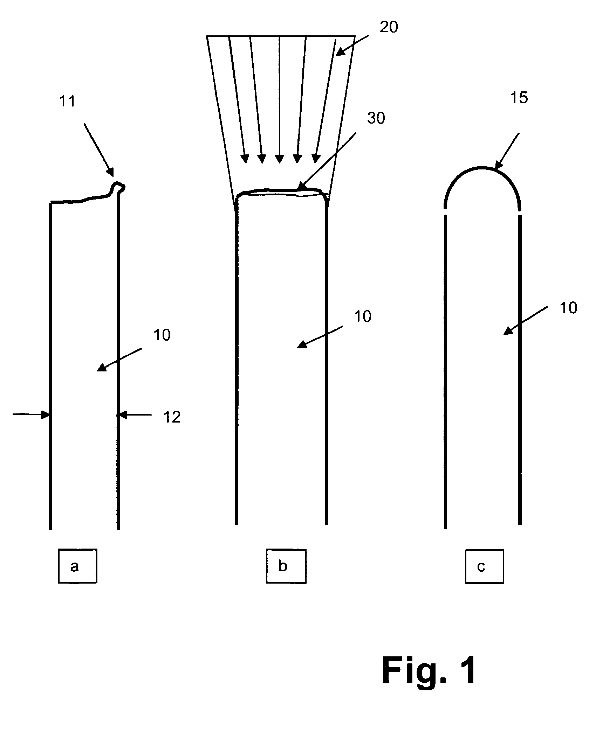

In der **Figur 1** ist ein Schnitt durch einen Abschnitt eines Werkstück zu sehen. Dargestellt sind schematisch drei unterschiedliche Momente oder Phasen bei der Durchführung eines erfindungsgemäßen Vorganges.

Ein zu bearbeitendes Werkstück 10 steht senkrecht zur Blattebene. Man sieht lediglich einen oberen Abschnitt des Werkstück 10 benachbart zu einer Schnittkante, die durch einen Stanz- oder Schneidvorgang entstanden ist, der die Form des Werkstückes 10 festlegt. Diese Schnittkante, die in den Darstellungen der Figur 1 etwa horizontal verläuft, bildet eine Stirnfläche 11, die sich ebenfalls senkrecht zur Blattebene erstreckt und die man dementsprechend nur im Schnitt sieht.

Das Werkstück 10 ist flächig und ist beispielsweise ein Stahlblech. Das Stahlblech beziehungsweise das Werkstück 10 besitzt eine Blechstärke beziehungsweise Dicke oder Stärke 12.

Man sieht zunächst in der **Figur 1a** die gratbehaftete Blech- oder Schnittkante im Schnitt. Man sieht dabei, dass aus der Stirnfläche 11 ein Grat 12 herausragt, im dargestellten Beispiel nur auf der in der Figur rechten Seite der Stirnfläche 11 des Werkstücks 10.

In der **Figur 1b** wird die Blechkante durch einen Laserstrahl 20 aufgeschmolzen.
Dabei wird der Fokus dieses Laserstrahles 20 hier so eingestellt, dass der Durchmesser des Laserstrahles geringförmig größer ist als die Blechstärke des Werkstückes 10 beträgt. Auf diese Weise bestrahlt der Laserstrahl die gesamte Breite der Stirnfläche 11 und außerdem unmittelbar angrenzenden Flächenbereiche der äußeren Seiten des Werkstückes, insbesondere also beide Seitenränder der Stirnfläche 11. Somit können beide Seitenränder beziehungsweise Blechkanten in einem Schritt gleichzeitig bearbeitet werden. Der Laserstrahl 20 ist so eingestellt, dass er senkrecht auf die Stirnfläche 11 auftrifft, Dadurch, dass die gesamte Breite der Stirnfläche 11 des Werkstückes mit Laserlicht beziehungswese Laserstrahlen 20 beaufschlagt wird, entsteht über der gesamten Breite der Stirnfläche 11, also über die gesamte Blechstärke, ein Schmelzbad 30.

Aufgrund des kreisrunden Querschnittes und des senkrechten Auftreffens des Laserstrahles 20 auf der Stirnfläche 11 entspricht die Länge des Schmelzbades 30 ungefähr der Länge der Blechstärke. Aufgrund der Oberflächenspannung des flüssigen Schmelzbades 30 ergibt sich automatisch eine nach oben abgerundete Form des Schmelzbades 30. Diese Form bleibt beim Erkalten und bis zum Erhärten des Schmelzbades erhalten.

Der Laserstrahl 20 wird nun parallel zu dieser Schnittkante des Werkstückes 10 und damit senkrecht zur Blattebene geführt. Er läuft also längs der gesamten Stirnfläche 11 des Werkstückes 10 und erreicht nacheinander alle Flächenbereiche. Durch eine stetige Bewegung des Lasers entlang der zu bearbeitenden Blechkante ergibt sich auf diese Weise ein gleichmäßiges, näherungsweise halbrundes Querschnittsprofil.

**Figur 1c** zeigt diesen Zustand nach Wegnahme des Laserstrahles 20. Es ergibt sich eine verrundete, gratfreie Stirnfläche 11 mit einer Verrundung 15 und damit eine entsprechende Blechkante nach dem Umschmelzen.

Auf die Darstellung einer Vorrichtung und einer bevorzugt vorgenommenen Formierung wird aus Gründen der Übersichtlichkeit verzichtet.

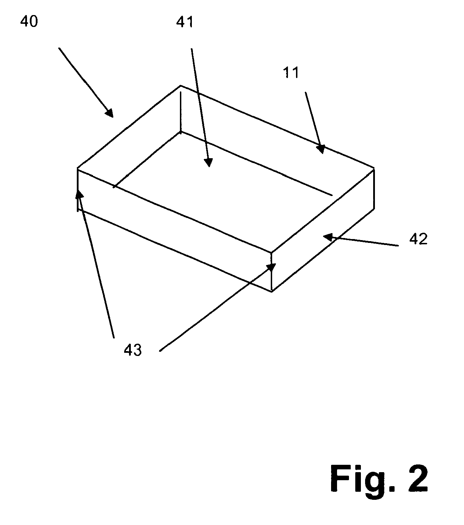

**Figur 2** zeigt eine perspektivische Ansicht eines dreidimensionalen kastenartigen Aufbaus aus einem flächigen Werkstück 10, beispielsweise dem aus der Figur 1.

Es handelt sich hier um eine einfache Blechkassette 40 aus einem Bodenblech 41 mit vier gekanteten Laschen 42, die die Umrandung des Blechkassette bilden. Der umlaufende Rand ist beispielsweise durch die vorhergehende Bearbeitung (etwa ein Stanzen) scharfkantig, so dass umlaufend vier nach oben gerichtete Stirnkanten 11 entsprechend zur Figur 1a entstehen.

Hier zeigt sich nun eine besonders effektive Einsatzmöglichkeit für eine Laserschweißanlage mit einem Laserschweißkopf und einem Roboterarm (nicht dargestellt).

Zunächst wird eine Ecke der Blechkassette 40, also zwei der Laschen 42, mittels des vom Laserschweißkopf ausgehenden Laserstrahles 20 zusammengeschweißt. Hier werden also Schweißnähte 43 gesetzt.

Während der Laserschweißkopf, gemäß der Erfindung, durch den Roboterarm von einer Schweißnaht 43 an einer der Ecken zwischen zwei Laschen 41 zur nächsten Ecke zwischen zwei benachbarten Laschen 43 fährt, er also herkömmlich eine nicht nutzbare Leerbewegung durchführen würde, wird jetzt erfindungsgemäß in zeit- und damit kostensparender Form die zwischen den Schweißnähten 43 liegende Oberkante und zugleich Stirnfläche 11 einer Lasche 42 durch Umschmelzen entgratet und gerundet.

Es entsteht also ein mehrfacher Nutzen durch den einmaligen Bewegungsvorgang des Schweißkopfes.

**Bezugszeichenliste**

| | |
|---|---|
| 10 | Werkstück |
| 11 | Stirnfläche |
| 12 | Dicke oder Stärke des Werkstückes |
| 15 | verrundete Oberfläche des Werkstückes |
| | |
| 20 | Laserstrahl |
| | |
| 30 | Schmelzbad |
| | |
| 40 | Blechkassette |
| 41 | Bodenblech |
| 42 | Lasche |
| 43 | Schweißnaht |

## Patentansprüche

1. Verfahren zur Bearbeitung von Bauelementen mit einer Kantenbehandlung flächiger metallischer Werkstücke, die Teile des Bauelementes darstellen, bei dem eine Kante eines Werkstückes (10) behandelt wird, welches Werkstück (10) eine Dicke oder Stärke (12) besitzt,
bei dem ein Laserstrahl (20) auf eine unebene Stirnfläche der Kante des Werkstücks (10) gerichtet wird,
bei dem der Laserstrahl (20) mit einem Schweißlaserkopf unter Abgabe des Laserstrahls (20) längs der Kante des Werkstückes verfahren wird,
**dadurch gekennzeichnet,**
**dass** das Bauelement mit seinem oder seinen Werkstücken (10) in einer Aufspannung festgelegt wird und dann ein Schweißlaserkopf mittels eines Mehrachsen - Roboterarms über die zu verbindenden und über die zu entgratenden Kanten des Bauelementes geführt wird,
**dass** der Laserstrahl (20) in senkrechter Richtung auf die Stirnfläche (11) gerichtet wird,
**dass** der Durchmesser des Laserstrahls (20) so gewählt wird, dass er gleich oder größer ist als die Stärke (12) des flächigen Werkstücks (10),
**dass** die Intensität des Laserstrahls (20) so gewählt wird, dass das metallische Material des Werkstückes (10) im Bereich der Stirnfläche (11) aufgeschmolzen wird,
**dass** nach dem Wegfahren des Schweißlaserkopfes mit dem Laserstrahl (20) von dem jeweils bestrahlten Bereich der Stirnfläche (11) das aufgeschmolzene metallische Material unter Beibehaltung einer verrundeten durch Oberflächenspannung entstandenen Oberfläche (15) zum Erkalten und Erhärten gebracht wird, und
**dass** vor und/oder nach dem Bestrahlen der gesamten Stirnfläche (11) des Werkstückes (10) mit dem gleichen Schweißlaserkopf und seinem Laserstrahl (20) unmittelbar anschließend Verbindungsvorgänge von mehreren Werkstücken (10) oder Abschnitten des gleichen Werkstückes (10) und/oder weitere Kantenbehandlungsvorgänge an anderen Stirnflächen (11) vorgenommen werden.

2. Verfahren zur Bearbeitung von Bauelementen nach Anspruch 1,
**dadurch gekennzeichnet,**
**dass** das zumindest während des Aufschmelzens des metallischen Materials der Stirnfläche (11) des Werkstückes (10) ein Formiergas eine Atmosphäre um das entstehende Schmelzbad (30) bildet, um einen Schutz gegenüber Oxidation zu erzielen.

3. Verfahren zur Bearbeitung von Bauelementen nach Anspruch 1 oder 2,
**dadurch gekennzeichnet,**
**dass** bei einer Stärke (12) des flächigen Werkstücks (10) zwischen 0,8 mm und 1,5 mm ein Laserstrahl (20) mit einem Durchmesser zwischen 1,5 mm und 2,0 mm Strahlbreite gewählt wird.

4. Verfahren zur Bearbeitung von Bauelementen nach einem der vorstehenden Ansprüche,
**dadurch gekennzeichnet,**
**dass** ein Laserstrahl (20) mit einer Leistung zwischen 400 Watt und 1.000 Watt gewählt wird.

5. Verfahren zur Bearbeitung von Bauelementen nach einem der vorstehenden Ansprüche,
**dadurch gekennzeichnet,**
**dass** eine Vorschubgeschwindigkeit des Laserstrahls (20) längs der Stirnfläche (11) des Werkstücks (10) zwischen 0,01 m/s und 0,03 m/s, insbesondere von 0,02 m/s gewählt wird.

## Claims

1. Method for processing structural elements with an edge treatment of flat metallic workpieces, which constitute parts of the structural element, [in which] an edge of a workpiece (10) is processed, which workpiece (10) has a thickness (10),
wherein a laser beam (20) is directed on an uneven face of the workpiece (10),
wherein the laser beam (20) with a welding laser head delivering the laser beam (20) is displaced along the edge of the workpiece
**characterised**
**in that** the structural element with its workpiece or workpieces (10) is fixed in a clamping device and then a welding head is guided by means of a multi-axis robot arm over the edges of the structural element to be joined and over the edges to be deburred,
**in that** the laser beam (20) is directed in a perpendicular direction on to the face (11),
**in that** the diameter of the laser beam (20) is chosen so that it is the same or larger than the thickness (12) of the flat workpiece (10),
**in that** the intensity of the laser beam (20) is chosen so that the metallic material of the workpiece (10) is melted in the region of the face (11),
**in that**, after the welding laser head with the laser beam (20) has moved away from the respective irradiated area of the face (11), the melted metallic material is cooled down and solidified while retaining a rounded surface (15) formed by surface tension, and
**in that**, before and/or after irradiation of the whole face (11) of the workpiece (10), directly associated joining processes are carried out between several workpieces (10) or sections of the same workpiece (10) with the same welding laser head and its laser beam (20) and/or further edge treatment procedures are carried out on other faces (11).

2. Method for processing structural elements in accordance with claim 1,
**characterised**
**in that**, at least during the melting of the metallic material of the face (11), a Formier gas forms an atmosphere around the molten pool (30) that is produced, to provide protection from oxidation.

3. Method for processing structural elements in accordance with claim 1 or 2,
**characterised**
**in that** a laser beam (20) with a diameter between 0.8 mm and 1.5 mm beam width is chosen for a thickness (12) of the flat workpiece (10) between 1.5 mm and 2.0 mm.

4. Method for processing structural elements in accordance with one of the preceding claims,
**characterised**
**in that** a laser beam (20) is chosen with a power between 400 W and 1000 W.

5. Method for processing structural elements in accordance with one of the preceding claims,
**characterised**
**in that** a feed speed of the laser beam (20) along the face (11) of the workpiece (10) between 0.01 m/s and 0.03 m/s is chosen, in particular 0.02 m/s.

## Revendications

1. Procédé pour l'usinage d'éléments de construction comprenant un traitement de bords de pièces métalliques plates qui représentent des parties de l'élément de construction,
dans lequel un bord d'une pièce (10) est traité, laquelle pièce (10) possède une grosseur ou épaisseur (12),
dans lequel un faisceau laser (20) est orienté sur une surface frontale non plane du bord de la pièce (10),
dans lequel le faisceau laser (20) est déplacé avec une tête de soudage laser en émettant le faisceau laser (20) le long du bord de la pièce,
**caractérisé en ce**
**que** l'élément de construction est fixé avec sa ou ses pièces (10) dans un serrage et une tête de soudage laser est guidée à l'aide d'un bras de robot à plusieurs axes sur les bords à relier et les bords à ébarber de l'élément de construction,
**que** le faisceau laser (20) est orienté dans la direction perpendiculaire à la surface frontale (11),
**que** le diamètre du faisceau laser (20) est choisi de telle sorte qu'il soit égal ou supérieur à l'épaisseur (12) de la pièce plate (10),
**que** l'intensité du faisceau laser (20) est choisie de sorte que le matériau métallique de la pièce (10) soit fondu dans la zone de la surface frontale (11),
**qu'**après l'éloignement de la tête de soudage laser avec le faisceau laser (20) de la zone irradiée respective de la surface frontale (11), le matériau métallique fondu est amené à refroidir et durcir en conservant une surface (15) arrondie apparue par tension superficielle, et
**qu'**avant et/ou après l'irradiation de la surface frontale entière (11) de la pièce (10) avec la même tête de soudage laser et son faisceau laser (20), des processus de liaison de plusieurs pièces (10) ou sections de la même pièce (10) et/ou d'autres processus de traitement de bords sur d'autres surfaces frontales (11) sont ensuite directement entrepris.

2. Procédé pour l'usinage d'éléments de construction selon la revendication 1,
**caractérisé en ce**
**qu'**au moins pendant la fonte du matériau métallique de la surface frontale (11) de la pièce (10), un gaz de formation forme une atmosphère autour du bain de fusion (30) apparu pour obtenir une protection contre l'oxydation.

3. Procédé pour l'usinage d'éléments de construction selon la revendication 1 ou 2,
**caractérisé en ce**
**que** pour une épaisseur (12) de la pièce plate (10) comprise entre 0,8 et 1,5 mm, on choisit un faisceau laser (20) d'un diamètre compris entre 1,5 et 2mm de largeur de faisceau.

4. Procédé pour l'usinage d'éléments de construction selon l'une quelconque des revendications précédentes,
**caractérisé en ce**
**qu'**on choisit un faisceau laser (20) avec une puissance comprise entre 400 et 1 000 watts.

5. Procédé pour l'usinage d'éléments de construction selon l'une quelconque des revendications précédentes,
**caractérisé en ce**
**qu'**on choisit une vitesse d'avance du faisceau laser (20) le long de la surface frontale (11) de la pièce (10) entre 0,01 m/s et 0,03 m/s, en particulier de 0,02 m/s.
